# EUROPEAN PATENT SPECIFICATION

(11) **EP 1 093 423 B1**
(45) Date of publication and mention of the grant of the patent: **15.05.2002**
(21) Application number: 99928087.8
(22) Date of filing: 24.06.1999
(51) Int. Cl.: B60R 7/08, B60R 11/00

(54) **A VEHICLE UTILITY ARRANGEMENT**
NUTZANORDNUNG IN KRAFTFAHRZEUGEN
SYSTEME POUR ACCESSOIRES DE VEHICULE

(30) Priority: 07.07.1998 GB 9814688
(43) Date of publication of application: 25.04.2001
(73) Proprietor: Bayerische Motoren Werke Aktiengesellschaft, 80809 München (DE)
(72) Inventor: MacANDREW, Kenneth, Douglas, Warwickshire CV8 1BG (GB); HUNTER, Tony, Alexander, Warwickshire CV35 0AR (GB)
(74) Representative: Schernhammer, Herbert
(86) International application number: GB9901988
(87) International publication number: WO0001556

(56) References cited:
- DE-A- 3 843 353
- DE-U- 9 001 252
- FR-A- 2 328 430
- US-A- 3 630 343
- US-A- 5 180 089

## Description

The present invention relates to a vehicle utility arrangement and more particularly to an arrangement whereby a range of different utility assemblies can be secured within the arrangement as required by the owner/occupant of a motor vehicle.

A number of such vehicle utility arrangements are known. The closest prior art vehicle utility arrangement according to the preamble of claim 1 is disclosed in DE 38 43 353 A in which a sheet support frame for car sun visor has coupler on frame section for releasable linking to sun visor holder. The support frame attaches an information sheet to a car sun visor. The rectangular frame is attached by a hinge to a fitting, attached to a clip. Another prior art arrangement is disclosed in US 5,180,089 A in which a universal vehicle accessory mounting has first and second mountings which extend along instrument panel with snap-fit interconnection. A third prior art arrangement is disclosed in DE 90 01 252 U in which an accessory mounting is descended to a lower horizontal rail of a window frame of camping cars.

An inherent problem with regard to motor vehicle manufacture and design is provision of utilities within the vehicle which are desired by some occupants/owners whilst only of marginal interest to other owners/occupants. The typical solution is to provide a range of option packages which include different levels of utility and trim for the vehicle and allow the purchaser of a vehicle to thereby specify those utility requirements. Unfortunately, such packaging of utility options and trim in itself requires subjective judgements by the vehicle manufacturer and may disproportionately add to cost both to the manufacturer and the purchaser of the vehicle.

It is an object of the present invention to provide a vehicle utility arrangement in which a wide range of utility assemblies can be located within the cabin of a motor vehicle as required.

In accordance with the present invention there is provided a vehicle utility arrangement comprising a clip member and a mounting element, the clip member being configured to engage a rail or stanchion within a vehicle cabin whilst the mounting element is associated with a utility assembly, the clip member comprising a spindle arranged to allow rotation between the clip member and the mounting element, with the clip member comprising a follower member to allow rotation of the mounting element between stable positions determined by reciprocal detent engagement between the follower member and the mounting element and thus in use the relative positioning on the utility assembly upon the rail or the stanchion within the vehicle cabin.

Preferably, the clip member sufficiently encompasses the rail or stanchion within a vehicle cabin to provide a robust coupling there between. Furthermore, and alternatively, a clip member could be associated with a band member to completely encompass the rail or stanchion member to facilitate robust coupling.

The contact surface of the clip member in abutment with a rail or stanchion within a vehicle cabin could include a foam surface or roughened means to facilitate friction grip between the rail or stanchion and the clip member.

The stable positions between the clip member and the mounting element could be additionally lockable to prevent further relative rotation without specific release of that lock, i.e. button latch extending between aligned apertures in the spindle and the mounting element.

The utility assembly could comprise a cigarette ashtray or a credit card holder or an occasional item container, e.g. for sunglasses or a mobile phone holster or a compact disk store.

The spindle could be splayed in order to allow snap engagement with the mounting element.

The mounting element in association with the spindle and/or the follower member could include stop elements arranged to limit the range of rotation between the spindle and the mounting element.

The surfaces between the spindle and the mounting element could be formed from a suitable material to allow easy rotation through bearing contact.

The mounting element generally includes a plurality of grooves in a circumferential surface and these grooves are engaged by an opposed pip detent of the follower member to define the respective stable positions.

The mounting element preferably includes an inner skirt and an outer skirt with the follower member arranged to detent engage the inner skirt and retained in such engagement by the outer skirt limiting radial deformation of the follower element.

An embodiment of the present invention will now be described by way of example only with reference to the accompanying drawings, in which:
Figure 1 is a pictorial front perspective of a clip member;
Figure 2 is a pictorial front perspective of a mounting element;
Figure 3 is a pictorial rear perspective of the mounting element depicted in Figure 2;
Figure 4 is a front perspective view of the clip member illustrated in Figure 1 coupled with the mounting element illustrated in Figures 2 and 3; and
Figure 5 is a front perspective view of an ashtray utility assembly.

As indicated previously, within a motor vehicle it is highly desirable to provide a range of utility assemblies to improve and augment the more functional features of the vehicle. Thus, a range of utility assemblies can be included and for example a cigarette ashtray, a credit card holder, a mobile phone holster and an occasional article storage container can be located within a vehicle cabin for occupant convenience. Clearly, provision of such utility assemblies within a vehicle can require significant design variation to allow integration into the dashboard facing or door panels etc. Such consideration makes provision of a wide range of utility assemblies within a vehicle difficult. Furthermore, accommodation of types or grades of utility assembly for substantially the same purpose but with different dimensional or accommodational requirements is a considerable design luxury.

In accordance with the present invention, a vehicle utility arrangement is described in which a rail or stanchion within a vehicle's cabin accommodation is utilised to allow mounting through a clip member and mounting element which may be associated with a wide range of utility assemblies. Essentially, the combination of the clip member and the mounting element ensures robust incorporation of the utility assembly within the vehicle along with variation in angular presentation as required by the particular utility assembly or occupant.

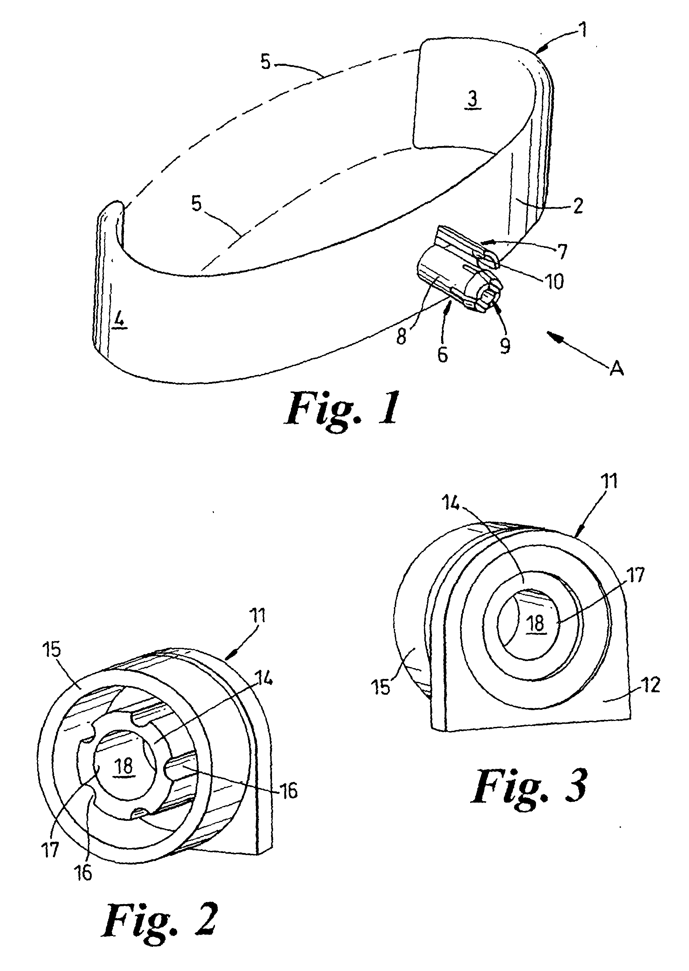

In Figure 1 a pictorial front perspective elevation of a clip member 1 in accordance with the present invention is depicted. This clip member 1 comprises a bowed component 2 having winged ends 3, 4 arranged to engage a rail or stanchion of a motor vehicle cabin. However, the shape of the clip member 1 is substantially determined by the rail or stanchion to which it is secured. It will also be understood that the clip member 1 could be flexible to adapt to the rail or stanchion cross-section. Typically, these winged ends 3, 4 will be in compressive engagement with the vehicle rail or stanchion in order to achieve an interference coupling which is sufficiently resilient to prevent movement under vehicle movement vibration and utility assembly load. The expected rail or stanchion is defined by the perimeter of the bowed component 2 and the broken lines 5 illustrated in Figure 1. It will also be understood that a band could be provided between the winged ends 3, 4 in order to further facilitate compressive engagement with a rail or stanchion of the vehicle to augment position or security of the clip member 1 upon that rail or stanchion. The band or buckle could extend from upturned lips at the end of each winged end 3, 4.

Upon an outer surface of the bowed component 2 a spindle 6 and a follower member 7 are secured in a concentric relationship. The spindle 6 acts as a bearing upon which a mounting element, described later, can rotate. Thus, the spindle 6 includes a bearing surface 8 and a splayed end 9 to allow snap retention of the mounting element. The follower member 7 may also include bearing surfaces but principally presents a pip detent 10 for engagement with the mounting element.

It will be appreciated that the spindle 6 and the follower element 7 are generally presented in an outward direction. Thus, access to the spindle 6 and follower member 7 is relatively unobstructed and so facilitates easy coupling with the mounting element described later.

In Figures 2 and 3 a mounting element 11 is illustrated respectively in pictorial front and rear perspective views. It will be appreciated that the rear view shown in Figure 3 will be that generally towards the interior of the vehicle and so a mounting surface 12 will be utilised to secure the mounting element 11 to any utility assembly. Furthermore, the mounting element 11 could be integral within any such utility assembly or adhered to it or fastened to it in any appropriate manner. Essentially, the functionality of the mounting element 11 is determined by an inner skirt 14 and an outer skirt 15. The inner skirt 14 includes grooves 16 which engage the pip detent 10 of the follower member 7. The outer skirt 15 acts to constrain radial deformation or deflection of the follower member 7 to ensure good presentation of the detent pip 10 for engagement with the grooves 16. It will be appreciated that rather than the grooves 16, orifices or apertures could be provided within the inner skirt 14 such that the pip detent 10 is relieved into engagement with these apertures or recesses in order to achieve the same detent engagement between the pip detent 10 and the inner skirt 14.

It will be appreciated by appropriate positioning of the grooves 16 that various accents and orientations of the mounting element 11 relative to the spindle 6 and therefore the clip member 1 can be achieved. Thus, with the clip member 1 secured to a rail or stanchion of a motor vehicle cabin and the mounting element 11 secured to a utility assembly, it will be appreciated that the assembly can be robustly mounted within the motor vehicle cabin. However, it will also be understood that as the clip member 1 is generally made from a plastics material, the spindle 6 and/or follower member 7 can be arranged to be relatively frangible upon impact such that during a motor vehicle collision the utility assembly secured there through in the motor vehicle cabin can become more flexible or deformable and therefore present less of a so-called hard point which may cause injury to an occupant of a vehicle.

The mounting element 11 is coupled to the spindle 6 by locating a central aperture 17 over the splayed end 9 such that a compressive force in the direction of arrow head A compresses the splayed end 9 whereupon the spindle 6 passes through the aperture 17 until the compression upon the splayed end 9 is relieved upon leaving the aperture 17. Thus, the end 9 then engages the periphery shoulder of the aperture 17 to secure the clip member 1 and the mounting element 11 together. It will be appreciated that the aperture 17 will typically also include a bearing surface 18 for association with the bearing surface 8 of the spindle 6. It will also be understood that the follower member 7 and in particular the pip detent 10 will also either engage a groove 16 on a circumferential surface of the inner skirt 14 during such assembly of the mounting element 11 to the spindle 6. In any event, rotation of the mounting element 11, with an associated utility assembly or not will bring the pip detent 10 into engagement with one of the grooves 16 in the required angular position.

Engagement between the pip detent 10 and the grooves 16 ensures stability for those angular positions and relationships between the spindle 6 and the mounting element 11.

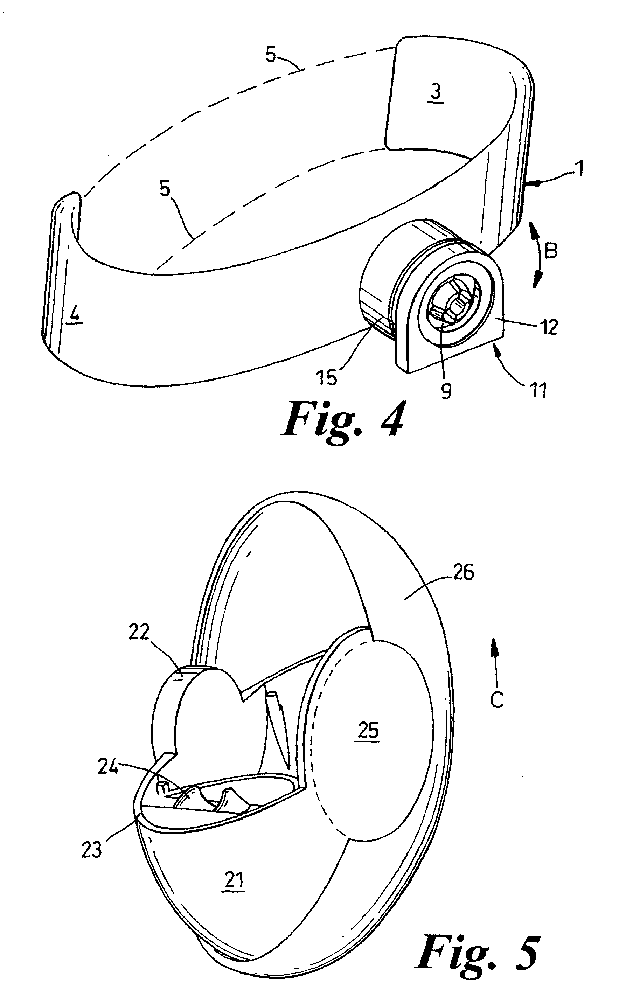

Figure 4 illustrates in front perspective view, the clip member 1 coupled to the mounting element 11. It will be noted that the coupling between the clip member 1 and the mounting element 11 is secured through the splayed end 9. Furthermore, rotation in the direction of arrowhead B is possible about the spindle 6 (not shown).
However, stable positions are only achieved at suitable relationships in which the pip detent 10 and one of the grooves 16 reciprocally engage.

Although the splayed end 9 robustly couples the clip member 1 and the mounting element 11, it will be appreciated that through use of an appropriate tool or other means for compression of the splayed end 9 that the mounting element 11 could be disengaged from the spindle 6.

Those skilled in the art will appreciated that as an alternative to the embodiment described with regard to Figures 1 to 4, that the spindle 6 could be secured in the mounting element 11 whilst the clip member 1 includes the inner skirt 14 with grooves 16 to engage a reciprocal detent, that is to say vice versa to that illustrated and described with regard to Figures 1 to 4.

The range of utility assemblies that can be accommodated by the present arrangement is relatively wide and it will be appreciated that some utility assemblies must be secured in particular orientations in order to be effective and/or safe despite the wishes of the vehicle occupant. Thus, further in accordance with the present invention, it will be appreciated that the range of rotation between the mounting element 11 and the clip member 1 may be limited. Such range limitation may be achieved through positioning of stop elements between the inner skirt 14 and the outer skirt 15 such that the follower member 7 cannot rotate beyond these stop elements. Furthermore, where only one position is acceptable, the stop elements may substantially prevent location such that a combination of the stop element and the detent pip 10 engaging a groove 16 provides robust and stable positioning of the mounting element 11 about the spindle 6 and therefore the clip member 1. By such means the appropriate orientation of a utility assembly secured through the mounting element 11 can be ensured. The stop members may be pegs appropriately moveable as required to adjust rotation range or fixed for permanent limitation.

As an alternative to providing stop members within the mounting element 11 between the inner skirt 14 and the outer skirt 15, it will be appreciated that specific locking at a particular position may be achieved. Such locking may be through aligned orifices in the mounting element 11 and the bowed component 2, or in the mounting element 11 and the follower member 7 and possibly the spindle 6, such that a dowel can be located to maintain such positional orientation between the clip member 1 and the mounting element 11 with reciprocal orientation between the rail/stanchion and any utility assembly secured to the mounting element 11.

Alternatively, the dowel could be replaced with a grub screw which extends through the aligned orifices to secure the relational position required. Finally, a push button arrangement could be used to push an elongate element through the aligned apertures at the required stable position such that this element bridged outer skirt 15, the follower member 7 and the inner skirt 14 in order to securely lock that position.

As indicated previously, a wide range of utility assemblies can be secured through the present arrangement within a motor vehicle cabin. These assemblies include a cigarette ashtray, a CD storage device, a credit card storage device, an occasional item, i.e. sunglasses, storage container or a mobile phone holster.

In Figure 5 an example of such an accessory assembly in the form of a cigarette ashtray is depicted in pictorial front perspective. The utility assembly comprises a base section 21 which is secured through a hub 22 to a mounting element in accordance with the present invention. The base section 21 can be orientated through rotation of the mounting element 11 as required by the occupant of that vehicle but will normally be such that a lip edge 23 is substantially parallel so that a cigarette rest 24 is appropriately orientated to hold the cigarette during motor vehicle driving motions. Opposed to the hub 22 is a shield element 25. Thus, a cover element 26 may be rotated about the hub 22 and shield element 25 in the direction of arrowhead C in order to close the cigarette ashtray when not required.

It will be appreciated that not every motor vehicle occupant or owner requires a cigarette ashtray. Thus, in accordance with the present invention, the utility arrangement through the spindle 6, follower member 7 and mounting element 11 could be utilised to secure an alternative, more appropriate utility assembly required by the current occupant of the vehicle or the owner of that vehicle.

Furthermore, as the clip member 1 can be readily removed from a motor vehicle cabin rail or stanchion, the whole infrastructure for provision of the utility assembly within the vehicle can be removed when not required without substantially altering the aesthetic appeal of the interior of the vehicle or necessitating radical alteration of that interior.

It will be appreciated that it is of benefit with regard to the present invention if the utility assemblies used also utilise the rotary nature of the coupling between the mounting element 11 and the clip member 1. Thus, typically the utility assemblies will be concentrically mounted about the spindle 6 in order to allow the occupant best access to that utility assembly. For example, with a compact disk CD storage device a hinged clamp arrangement will be provided with one side of the clamp secured to the clip member 1 whilst the other side may hinge into the vehicle such that there are a concertina of slots within which compact disks can be located. Similarly, a credit card storage device may comprise a circular disc within which slots are located to accommodate respective credit cards. The disc being rotatable about the spindle 6 in order to ensure most convenient presentation of those credit cards to an occupant of the vehicle. Finally, a mobile phone holster may be secured to the clip member 1 such that the orientation of a mobile phone held within the holster can be adjusted to facilitate "hands-free" operation, i.e. when not in use the mobile phone may be substantially perpendicular, whilst in use the microphone end of the phone angled through rotation of the holster towards the occupant of the motor vehicle wishing to use the mobile phone.

As also indicated above, the present utility arrangement could be used to secure an occasional storage bin for sunglasses, etc, or a receptacle for waste, etc. In such circumstances it will be appreciated that the mounting element 11 secured to the clip member 1 will act as a convenient hook-like mount within the vehicle to which storage bins, or possibly flimsy carrier bags, can be attached to ensure they remain in an upright orientation.

## Claims

1. A vehicle utility arrangement comprising a clip member (1) and a mounting element (11), the clip member (1) being configured to engage a rail or a stanchion within a vehicle cabin whilst the mounting element (11) may be associated with a utility assembly, the clip member (1) comprising a spindle (6) arranged to allow rotation between the clip member (1) and the mounting element (11), **characterized in that** the clip member (1) comprises a follower member (7) to allow rotation of the mounting element (11) between stable positions determined by reciprocal detent engagement between the follower member (7) and the mounting element (11) and thus in use relative positioning of the utility assembly upon the rail or stanchion within the vehicle cabin.

2. An arrangement as claimed in Claim 1, wherein the clip member (1) includes winged ends (3, 4) arranged to sufficiently encompass the rail or the stanchion to provide robust interference coupling between the clip member (1) and that rail or stanchion.

3. An arrangement as claimed in Claim 1 or Claim 2, wherein the clip member (1) includes a band in order to ensure that the rail or the stanchion is completely encompassed by the clip member (1) in use.

4. An arrangement as claimed in Claim 1, 2 or 3, wherein the clip member (1) has a surface for contact with the rail or stanchion which facilitates additional frictional grip there between.

5. An arrangement as claimed in any preceding claim, wherein the spindle (6) has a splayed end (9) to allow snap coupling to the mounting element (11).

6. An arrangement as claimed in any preceding claim, wherein the arrangement includes stop members to limit relative rotation between the clip member (1) and the mounting element (11) as required.

7. An arrangement as claimed in any preceding claim, wherein the mounting element (11) includes a plurality of grooves (16) in a circumferential surface to engage an opposed pip detent (10) of the follower member (7) to define the perspective stable positions between the clip member (1) and the mounting element (11).

8. An arrangement as claimed in any preceding claim, wherein the mounting element (11) includes an inner skirt (14) and an outer skirt (15) with the follower member (7) arranged in use to be in detent engagement with the inner skirt (14) whilst retained in such engagement by the outer skirt (15) limiting radial deformation of the follower member (7) away from the inner skirt (14).

9. An arrangement as claimed in any preceding claim, wherein at least one of the stable positions may be locked through an appropriate dowel or grub screw extended between aligned of orifices in the clip member (1) and the mounting element (11).

10. An arrangement as claimed in any preceding claim, wherein the utility assembly may be a cigarette ashtray or a credit card storage device or occasional item storage bin or a mobile phone holster or a compact disk storage device.

## Patentansprüche

1. Nutzanordnung eines Fahrzeugs mit einem Klemmglied (1) und einem Befestigungselement (11), wobei das Klemmglied (1) zur Ineingriffnahme einer Schiene oder Stütze in einer Fahrzeugkabine konfiguriert ist, während das Befestigungselement (11) einer Nutzvorrichtung zugeordnet sein kann, wobei das Klemmglied (1) eine Spindel (6) umfaßt, die so angeordnet ist, daß sie eine Drehung zwischen dem Klemmglied (1) und dem Befestigungselement (11) gestattet, **dadurch gekennzeichnet, daß** das Klemmglied (1) ein Tastglied (7) umfaßt, um eine Drehung des Befestigungselements (11) zwischen stabilen Stellungen, die durch gegenseitigen Arretierungseingriff zwischen dem Tastglied (7) und dem Befestigungselement (11) bestimmt werden, und somit im Gebrauch eine relative Positionierung der Nutzvorrichtung an der Schiene oder Stütze in der Fahrzeugkabine zu gestatten.

2. Anordnung nach Anspruch 1, bei der das Klemmglied (1) Flügelenden (3, 4) enthält, die so angeordnet sind, daß sie die Schiene oder die Stütze ausreichend umgreifen, um eine robuste Preßverbindung zwischen dem Klemmglied (1) und der Schiene oder Stütze bereitzustellen.

3. Anordnung nach Anspruch 1 oder 2, bei der das Klemmglied (1) ein Band enthält, um zu gewährleisten, daß die Schiene oder die Stütze im Gebrauch von dem Klemmglied (1) vollkommen umgriffen wird.

4. Anordnung nach Anspruch 1, 2 oder 3, bei der das Klemmglied (1) eine Oberfläche zum Kontakt mit der Schiene oder Stütze aufweist, die einen zusätzlichen Reibgriff zwischen ihnen erleichtert.

5. Anordnung nach einem der vorhergehenden Ansprüche, bei der die Spindel (6) ein abgeschrägtes Ende (9) aufweist, um eine Schnappverbindung mit dem Befestigungselement (11) zu gestatten.

6. Anordnung nach einem der vorhergehenden Ansprüche, die Anschlagglieder zur Begrenzung einer relativen Drehung zwischen dem Klemmglied (1) und dem Befestigungselement (11) je nach Bedarf enthält.

7. Anordnung nach einem der vorhergehenden Ansprüche, bei der das Befestigungselement (11) in einer Umfangsfläche mehrere Nuten (16) zum Eingriff mit einer gegenüberliegenden Zahnarretierung (10) des Tastglieds (7) zur Definition der jeweiligen stabilen Stellungen zwischen dem Klemmglied (1) und dem Befestigungselement (11) enthält.

8. Anordnung nach einem der vorhergehenden Ansprüche, bei der das Befestigungselement (11) eine innere Schürze (14) und eine äußere Schürze (15) enthält und das Tastglied (7) im Gebrauch so angeordnet ist, daß es sich in Arretierungseingriff mit der inneren Schürze (14) befindet, während es durch die äußere Schürze (15) in einem solchen Eingriff festgehalten wird, wodurch eine radiale Verformung des Tastglieds (7) von der inneren Schürze (14) weg begrenzt wird.

9. Anordnung nach einem der vorhergehenden Ansprüche, bei der mindestens eine der stabilen Stellungen durch einen geeigneten Paßstift bzw. eine geeignete Madenschraube verriegelt werden kann, der bzw. die sich zwischen fluchtenden Öffnungen im Klemmglied (1) und im Befestigungselement (11) erstreckt.

10. Anordnung nach einem der vorhergehenden Ansprüche, bei der die Nutzvorrichtung ein Zigarettenaschenbecher oder eine Kreditkartenablagevorrichtung oder ein Ablagebehälter für gelegentlich mitgeführte Gegenstände oder ein Mobiltelefonhalfter oder eine CD-Ablagevorrichtung sein kann.

## Revendications

1. Système pour accessoires de véhicule, comprenant un élément de pince (1) et un élément de monture (11), l'élément de pince (1) étant configuré pour s'engager sur un rail ou un montant à l'intérieur d'une cabine de véhicule, tandis que l'élément de monture (11) peut être associé à un dispositif d'accessoire, l'élément de pince (1) comprenant une broche (6) disposée pour permettre une rotation entre l'élément de pince (1) et l'élément de monture (11),
**caractérisé en ce que**
l'élément de pince (1) comprend un élément suiveur (7) pour permettre une rotation de l'élément de monture (11) entre des positions stables déterminées par un engagement réciproque à détente entre l'élément suiveur (7) et l'élément de monture (11), de façon qu'en cours d'utilisation, on puisse obtenir un positionnement relatif du dispositif d'accessoire sur le rail ou sur le montant à l'intérieur de la cabine du véhicule.

2. Système selon la revendication 1,
dans lequel
l'élément de pince (1) comprend des extrémités en forme d'ailes (3, 4) disposées pour entourer suffisamment le rail ou le montant de manière à fournir un accouplement d'emboîtement robuste entre l'élément de pince (1) et le rail ou le montant.

3. Système selon la revendication 1 ou la revendication 2,
dans lequel
l'élément de pince (1) comprend une bande pour s'assurer que le rail ou le montant soit complètement entouré par l'élément de pince (1) en cours d'utilisation.

4. Système selon la revendication 1, 2 ou 3,
dans lequel
l'élément de pince (1) comporte une surface destinée à venir en contact avec le rail ou le montant de manière à faciliter un serrage à frottement supplémentaire entre eux.

5. Système selon l'une quelconque des revendications précédentes,
dans lequel
la broche (6) comporte une extrémité ébrasée (9) pour permettre un accouplement à enclenchement avec l'élément de monture (11).

6. Système selon l'une quelconque des revendications précédentes,
dans lequel
le système comprend des éléments de butée pour limiter une rotation relative entre l'élément de pince (1) et l'élément de monture (11), suivant les besoins.

7. Système selon l'une quelconque des revendications précédentes,
dans lequel
l'élément de monture (11) comprend un certain nombre de rainures (16) dans une surface circonférentielle, ces rainures étant destinées à recevoir une détente ponctuelle opposée (10) de l'élément suiveur (7), de manière à définir des positions stables respectives entre l'élément de pince (1) et l'élément de monture (11).

8. Système selon l'une quelconque des revendications précédentes,
dans lequel
l'élément de monture (11) comprend une jupe intérieure (14) et une jupe extérieure (15), tandis que l'élément suiveur (7) est disposé, en cours d'utilisation, pour former un engagement à détente avec la jupe intérieure (14), tout en étant retenu dans cet engagement par la jupe extérieure (15) limitant une déformation radiale de l'élément suiveur (7) risquant de l'écarter de la jupe intérieure (14).

9. Système selon l'une quelconque des revendications précédentes,
dans lequel
l'une au moins des positions stables peut être verrouillée par un goujon approprié ou une vis sans tête appropriée s'étendant entre des orifices alignés prévus dans l'élément de pince (1) et l'élément de monture (11).

10. Système selon l'une quelconque des revendications précédentes,
dans lequel
le dispositif d'accessoire peut être un cendrier, un dispositif de rangement de cartes de crédit, une boîte de rangement d'articles occasionnels, un étui de téléphone mobile, ou un dispositif de rangement de disques compacts.
